# DEMANDE DE BREVET EUROPEEN

(11) **EP 2 745 879 A2**
(43) Date de publication de la demande: **25.06.2014**
(21) Numéro de dépôt: 13198679.6
(22) Date de dépôt: 19.12.2013
(51) Int. Cl.: A62C 2/24, F16H 61/02, F16D 43/06, F24F 13/14

(54) **Dispositif de transmission automatiquement embrayable et débrayable**

(30) Priorité: 21.12.2012 FR 1262525
(71) Demandeur: Luxalp, 74370 Villaz (FR); ALDES AERAULIQUE, 69200 Vénissieux (FR)
(72) Inventeur: Merlen, Michaël, 74800 LA ROCHE SUR FORON (FR); Perraud, Sébastien, 69008 LYON (FR)
(74) Mandataire: Poncet, Jean-François

(57) **Abrégé**

Dispositif de transmission (1) automatiquement embrayable et débrayable, comprenant :
- un premier ensemble de transmission (3) à arbre d'entrée (4) destiné à être entraîné par un moteur (5), et comprenant une pignonnerie (6) réductrice en vitesse de rotation,
- un deuxième ensemble de transmission (8) à élément de sortie (8a),
- un embrayage (9) permettant de sélectivement coupler en série ou découpler la sortie du premier ensemble de premier ensemble de transmission (3) et l'entrée du deuxième ensemble de transmission (8),
- des moyens d'actionnement à inertie (10) de l'embrayage (9), aptes à provoquer sélectivement l'embrayage et le débrayage en fonction de leur vitesse de rotation. Les moyens d'actionnement (10) sont entraînés en rotation à une vitesse supérieure à la vitesse de rotation en sortie du premier ensemble de transmission (3).

## Description

La présente invention concerne un dispositif de transmission automatiquement embrayable et débrayable, ainsi qu'une utilisation particulière d'un tel dispositif pour la manoeuvre d'un ouvrant, notamment dans un dispositif d'obturation d'une lumière d'un conduit aéraulique, en particulier pour l'aération et l'évacuation de fumées d'un bâtiment.

De nombreux systèmes mécaniques sont actionnés dans un sens direct par un moteur entraînant un arbre d'entrée auquel est connecté un ensemble de transmission comportant une pignonnerie réductrice en vitesse de rotation afin d'entraîner un élément de sortie à vitesse plus réduite que celle du moteur et avec un couple d'entraînement supérieur à celui du moteur.

A l'arrêt du moteur, certains de ces systèmes mécaniques doivent pouvoir être manoeuvrés aisément en sens inverse, notamment quand il s'agit d'une manoeuvre inverse provoquée manuellement ou par des moyens élastiques de rappel. Cependant, le moteur oppose toujours des frottements et/ou un léger couple résiduel s'opposant à la manoeuvre inverse. L'effet de ces frottements et/ou de ce couple résiduel, qui sont en général faibles, est cependant amplifié par la pignonnerie réductrice de l'ensemble de transmission. Et la pignonnerie réductrice présente aussi elle-même des frottements qui s'opposent également à la manoeuvre inverse.

Il en résulte que la manoeuvre inverse nécessite une grande force manuelle ou une grande force des moyens élastiques de rappel. Cela est particulièrement défavorable car, lors d'un actionnement dans le sens direct, le moteur doit aussi vaincre la résistance des moyens élastiques de rappel.

Pour éviter ces inconvénients, on pourrait songer à utiliser un embrayage automatique à moyens d'actionnement à inertie, apte à provoquer sélectivement l'embrayage et le débrayage en fonction de la vitesse de rotation des moyens d'actionnement.

Une première solution consisterait à disposer l'embrayage automatique entre l'arbre d'entrée et l'ensemble de transmission à pignonnerie réductrice, comme décrit dans le document EP 0 931 953 A1. Mais dans ce cas, lors d'une manoeuvre inverse, seul le moteur est déconnecté par l'embrayage. La pignonnerie réductrice s'oppose toujours à la manoeuvre inverse.

Une deuxième solution consisterait à disposer l'embrayage automatique après l'ensemble de transmission à pignonnerie réductrice, comme décrit dans le document US 4,966,266 A. Mais dans ce cas, les moyens d'actionnement à inertie de l'embrayage sont alors entraînés à la vitesse de rotation réduite disponible en sortie de la pignonnerie réductrice. Un entraînement à vitesse réduite des moyens d'actionnement à inertie induit des risques de dysfonctionnement de l'embrayage, qui peut dans certains cas avoir du mal à s'embrayer.

Les inconvénients de ces première et deuxième solutions seraient critiques lors de la manoeuvre d'un ouvrant, et plus particulièrement lors de la manoeuvre d'un ouvrant de sécurité pour l'obturation d'une lumière d'un conduit aéraulique pour l'aération et l'évacuation de fumées d'un bâtiment. Avec la première solution, on risquerait de ne pas parvenir à ouvrir l'ouvrant pour aérer et évacuer les fumées. Avec la deuxième solution, on risquerait de ne pas réussir à fermer de façon motorisée les ouvrants de sécurité, ce qui obligerait à les manoeuvrer individuellement et manuellement, ce qui est très long et pénible car un bâtiment comporte généralement de très nombreux ouvrants de sécurité, parfois difficilement accessibles.

Le document US 2004/0074326 A1 décrit un dispositif de transmission selon le préambule de la revendication 1.

Le problème proposé par la présente invention est de concevoir un dispositif de transmission automatiquement embrayable, comportant une pignonnerie réductrice en vitesse de rotation et un embrayage automatique, dans lequel on limite la résistance du dispositif de transmission en cas de manoeuvre inverse, et dans lequel l'embrayage automatique a un fonctionnement plus fiable.

Pour atteindre ces objets ainsi que d'autres, l'invention propose un dispositif de transmission automatiquement embrayable et débrayable, comprenant :
- un premier ensemble de transmission à arbre d'entrée destiné à être entraîné par un moteur, et comportant une pignonnerie réductrice en vitesse de rotation,
- un deuxième ensemble de transmission à élément de sortie,
- un embrayage permettant de sélectivement coupler en série ou découpler la sortie du premier ensemble de transmission et l'entrée du deuxième ensemble de transmission,
- des moyens d'actionnement à inertie de l'embrayage, aptes à provoquer sélectivement l'embrayage et le débrayage en fonction de leur vitesse de rotation ; selon l'invention, les moyens d'actionnement sont couplés à l'arbre d'entrée de façon à être entraînés en rotation à une vitesse supérieure à la vitesse de rotation en sortie du premier ensemble de transmission.

En cas de manoeuvre inverse, ni la pignonnerie réductrice du premier ensemble de transmission ni le moteur (destiné à entraîner l'arbre d'entrée) ne sont entraînés. Ceux-ci ne s'opposent donc plus à la manoeuvre inverse.

Les moyens d'actionnement sont entraînés par le moteur (destiné à entraîner l'arbre d'entrée) en parallèle du premier ensemble de transmission et peuvent donc fonctionner à une vitesse de rotation garantissant une fiabilité de fonctionnement satisfaisante de l'embrayage car cette vitesse est supérieure à la vitesse de rotation en sortie du premier ensemble de transmission.

De préférence, on peut prévoir que :
- les moyens d'actionnement comportent des éléments inertiels retenus captifs entre un premier plateau, couplé en rotation avec l'arbre d'entrée, et un deuxième plateau déplaçable entre une première position axiale et une deuxième position axiale, les éléments inertiels étant solidaires en rotation du premier plateau,
- les premier et deuxième plateaux sont conformés de telle sorte que, lorsque le premier plateau est entraîné en rotation au-delà d'une première vitesse prédéterminée, les éléments inertiels entraînés en rotation par le premier plateau se déplacent radialement de façon centrifuge en provoquant un déplacement axial relatif du deuxième plateau vers sa deuxième position axiale à l'écart du premier plateau.

L'embrayage présente ainsi une structure très simple et robuste. Les éléments inertiels, étant solidaires en rotation du premier plateau, sont bien couplés en rotation avec le moteur (destiné à entraîner l'arbre d'entrée) et sont donc entraînés à une vitesse de rotation satisfaisante pour un fonctionnement fiable de l'embrayage car cette vitesse est supérieure à la vitesse de rotation en sortie du premier ensemble de transmission.

Avantageusement, le premier plateau et/ou le deuxième plateau peuvent avoir une surface intérieure concave de forme tronconique. Une telle forme de surface(s) intérieure(s) est apte à provoquer un écartement axial des premier et deuxième plateaux en coopération avec les éléments inertiels se déplaçant radialement sous l'effet de la force centrifuge.

De préférence, l'embrayage peut comporter des moyens de rappel élastique du deuxième plateau vers sa première position axiale. Les moyens de rappel élastique assurent un retour du deuxième plateau en première position axiale, c'est-à-dire un débrayage, lorsque la vitesse de rotation du premier plateau ne suffit plus à maintenir les éléments inertiels radialement écartés. Lorsque le moteur entraînant l'arbre d'entrée est arrêté, le débrayage est ainsi assuré.

Avantageusement, les éléments inertiels peuvent être reçus dans des rainures de guidage radiales prévues dans le premier plateau. Les éléments inertiels sont ainsi solidarisés en rotation de façon fiable avec le premier plateau. Avantageusement, on peut prévoir que :
- le deuxième plateau est solidaire en rotation d'une roue de sortie du premier ensemble de transmission et comporte au moins un élément d'embrayage,
- les éléments inertiels peuvent être en contact ponctuel avec le deuxième plateau, et sont de préférence des billes.

Etant solidaire en rotation de la roue de sortie du premier ensemble de transmission, le deuxième plateau tourne à une vitesse plus réduite que le premier plateau entraînant en rotation les éléments inertiels. Il se produit donc un glissement entre les éléments inertiels et le deuxième plateau. Un contact ponctuel entre les éléments inertiels et le second plateau réduit les frottements engendrés par ce glissement.

De préférence, on peut prévoir que :
- le deuxième plateau est solidaire en rotation d'une roue de sortie du premier ensemble de transmission et comporte au moins un élément d'embrayage,
- un élément rotatif d'entrée du deuxième ensemble de transmission et la roue de sortie du premier ensemble de transmission sont disposés en vis-à-vis et sont rotatifs autour d'une même direction de rotation,
- lorsque le deuxième plateau se déplace vers sa deuxième position axiale, l'élément d'embrayage est déplacé en translation vers l'élément rotatif d'entrée du deuxième ensemble de transmission, de façon à venir au contact, selon une surface latérale extérieure de contact, d'une première face de butée portée par l'élément rotatif d'entrée du deuxième ensemble de transmission pour coupler en rotation les premier et deuxième ensembles de transmission.

On dispose ainsi d'une architecture simple et efficace d'embrayage ou de crabot.

Avantageusement, l'élément d'embrayage peut être en permanence engagé dans une lumière prévue dans la roue de sortie du premier ensemble de transmission. Le deuxième plateau est ainsi rendu solidaire en rotation de la roue de sortie du premier ensemble de transmission de façon simple, efficace, et l'embrayage présente un encombrement réduit.

De préférence, on peut prévoir que, pour coupler en rotation les premier et deuxième ensembles de transmission, l'élément d'embrayage est pris en cisaillement, selon sa surface latérale extérieure de contact, entre la première face de butée portée par l'élément rotatif d'entrée du deuxième ensemble de transmission et une deuxième face de butée portée par la roue de sortie du premier ensemble de transmission.

Le cisaillement appliqué sur l'élément d'embrayage permet un maintien efficace de l'embrayage en position embrayée, et ce même si la vitesse des moyens d'actionnement de l'embrayage vient à chuter, notamment en-dessous de la première vitesse prédéterminée.

Dans certaines applications, il peut être souhaitable de maintenir l'embrayage en position embrayée, et ce jusqu'à ce que la vitesse des moyens d'actionnement de l'embrayage devienne nulle. Pour ce faire, on peut prévoir des moyens de maintien qui s'opposent à un retour du deuxième plateau en première position axiale.

En pratique, les moyens de maintien peuvent comporter une rugosité adaptée entre la surface latérale extérieure de contact et la première face de butée, et/ou entre la surface latérale extérieure de contact et une deuxième face de butée portée par la roue de sortie du premier ensemble de transmission.

En alternative ou en complément, les moyens de maintien peuvent comporter une pente sur la surface latérale extérieure de contact et/ou une pente sur la première face de butée et/ou une pente sur la deuxième face de butée.

L'utilisation du dispositif de transmission selon la présente invention permettant de s'affranchir de la résistance induite par les frottements et/ou le couple permanent du moteur, il est alors possible d'utiliser des dispositifs de motorisation débrayables utilisant un moteur électrique à courant continu pour entraîner l'arbre d'entrée et manoeuvrer un ouvrant. En effet, un moteur à courant continu est en général peu onéreux, mais comporte des balais collecteurs qui génèrent des frottements ainsi qu'un couple résistant permanents et ne peut fournir qu'un faible couple d'entraînement. L'utilisation du dispositif de transmission selon la présente invention rend possible et profitable une utilisation de tels moteurs jusque là pénalisés par les inconvénients précédemment cités.

Le dispositif de motorisation débrayable peut de préférence comporter des moyens d'actionnement de l'ouvrant comprenant une poulie, couplée à l'élément de sortie du deuxième ensemble de transmission, sur laquelle s'enroule et se déroule un ruban métallique flexible.

Un tel ruban présente un faible encombrement une fois enroulé, s'enroule et se déroule avec un faible risque d'erreur ou de blocage comparé à un lien souple de type câble. Enfin, un tel ruban présente l'avantage de prendre une flèche limitée lors de son déroulement comparé à un lien souple de type câble, ce qui limite les risques d'emmêlement.

L'utilisation d'un dispositif de transmission selon l'invention, mû par un moteur électrique, est particulièrement adaptée dans un dispositif d'obturation d'une lumière d'un conduit aéraulique, notamment pour l'aération et l'évacuation de fumées d'un bâtiment, comportant :
- un dormant destiné à être monté dans la lumière du conduit aéraulique,
- au moins un ouvrant monté sur le dormant par des moyens de liaison, et déplaçable entre une position d'ouverture et une position de fermeture.

Tout d'abord, un dispositif d'obturation d'une lumière d'un conduit aéraulique est généralement placé à des endroits difficilement accessibles, et un bâtiment compte en général un grand nombre de dispositifs d'obturation. Il est donc important que la fermeture de l'ouvrant soit pilotée de façon fiable grâce à un embrayage au fonctionnement irréprochable.

Ensuite, la manoeuvre en fermeture de l'ouvrant nécessite l'application d'un couple qui augmente au fur et à mesure de la fermeture de la lumière. En fin de fermeture, le couple à appliquer devient même très important pour bien fermer la lumière du conduit aéraulique de façon hermétique, le plus souvent en comprimant des joints d'étanchéité prévus entre le dormant et l'ouvrant. Grâce à sa pignonnerie réductrice, le dispositif de transmission selon l'invention permet l'application d'un couple satisfaisant sans avoir recours à des moteurs trop onéreux ou trop encombrants.

Enfin, une fois l'ouvrant fermé, il est crucial que celui-ci puisse être manoeuvré à l'inverse en ouverture en rencontrant le moins de résistance possible, ce que permet le dispositif de transmission selon l'invention par un débrayage fiable dès que le moteur est arrêté grâce à son embrayage automatique fonctionnant par inertie. Ce débrayage permet de s'affranchir de toute résistance qui serait induite, en cas de manoeuvre inverse, par le moteur et la pignonnerie réductrice du premier ensemble de transmission.

De préférence, la manoeuvre en ouverture de l'ouvrant est provoquée par des moyens de rappel de l'ouvrant en position d'ouverture.

D'autres objets, caractéristiques et avantages de la présente invention ressortiront de la description suivante de modes de réalisation particuliers, faite en relation avec les figures jointes, parmi lesquelles :
- la figure 1 est une vue de face d'un dispositif de motorisation débrayable comprenant un dispositif de transmission selon l'invention ;
- la figure 2 est une vue de côté du dispositif de motorisation débrayable de la figure 1 ;
- la figure 3 est une vue en perspective du dispositif de motorisation débrayable de la figure 1, avec certains éléments illustrés en transparence et traits discontinus pour plus de clarté ;
- la figure 4 est une vue de détail et en coupe d'un dispositif de transmission selon un premier mode de réalisation de l'invention, en position débrayée ;
- la figure 5 est une vue de détail et en coupe du dispositif de transmission de la figure 4 en position embrayée ;
- la figure 6 est une vue de détail et en coupe d'un dispositif de transmission selon un deuxième mode de réalisation de l'invention, en position embrayée ;
- la figure 7 est une vue de détail et en coupe d'un dispositif de transmission selon un troisième mode de réalisation de l'invention, en position débrayée ;
- la figure 8 est une vue en perspective d'un dispositif d'obturation d'une lumière d'un conduit aéraulique muni d'un dispositif de transmission selon l'invention.

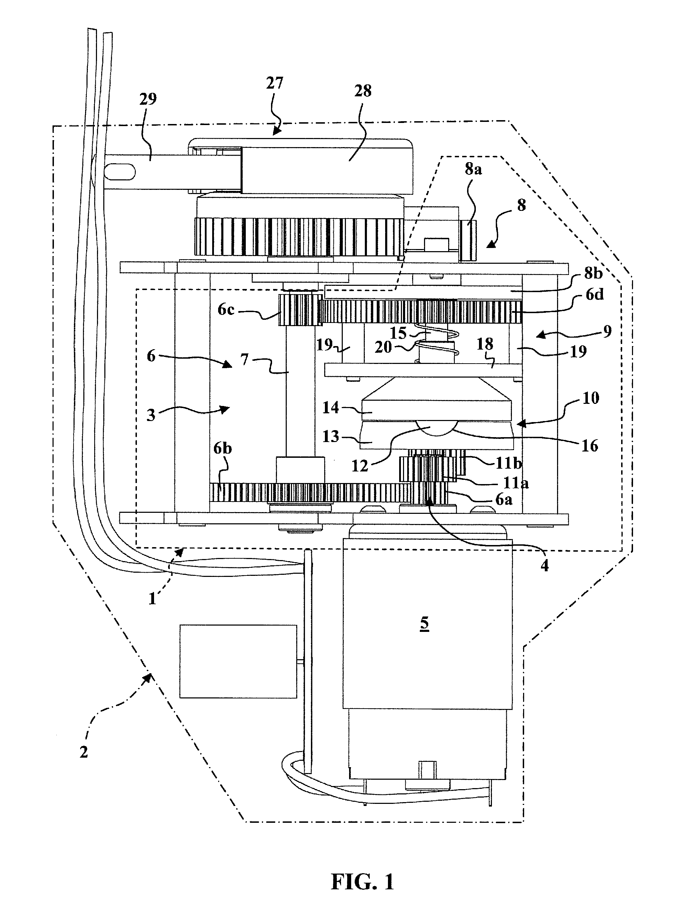

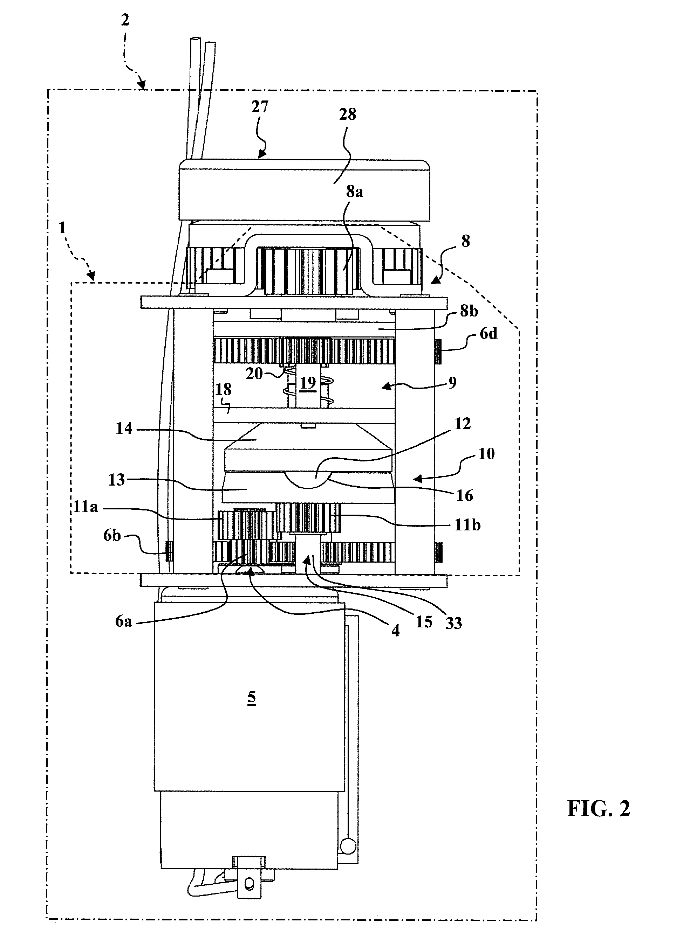

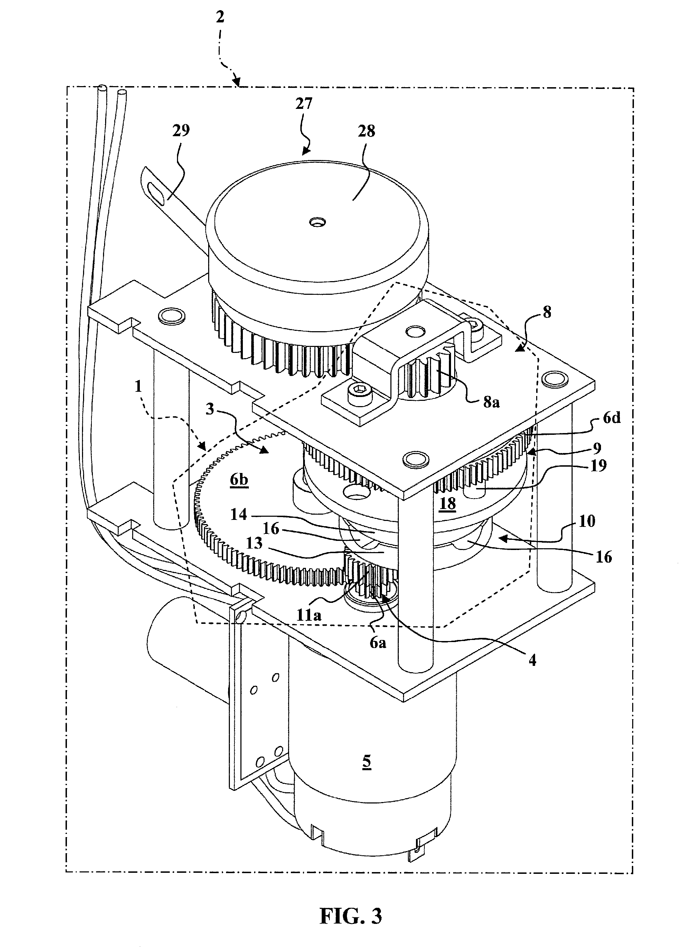

Sur les figures 1 à 3 est illustré un dispositif de motorisation débrayable 2 comprenant un dispositif de transmission 1 automatiquement embrayable et débrayable selon l'invention.

Le dispositif de transmission 1 comprend un premier ensemble de transmission 3 à arbre d'entrée 4 destiné à être entraîné par un moteur 5. Le premier ensemble de transmission 3 comporte une pignonnerie 6 réductrice en vitesse de rotation. Pour ce faire, la pignonnerie 6 comprend un pignon 6a monté sur l'arbre d'entrée 4, s'engrenant avec une roue dentée 6b solidaire en rotation d'un arbre secondaire 7 sur lequel est monté un pignon 6c s'engrenant avec une roue dentée 6d. La roue dentée 6d est la roue de sortie du premier ensemble de transmission 3, de sorte qu'il sera indifféremment indiqué ci-après « roue dentée 6d », « roue de sortie 6d » ou encore « roue dentée de sortie 6d ».

Le dispositif de transmission 1 comprend également un deuxième ensemble de transmission 8 à élément de sortie 8a qui est ici une roue dentée (mais qui peut également être un arbre de sortie par exemple).

Un embrayage 9 permet de sélectivement coupler en série ou découpler la sortie du premier ensemble de transmission 3 (constituée ici par la roue de sortie 6d) et l'entrée du deuxième ensemble de transmission 8 (constituée par un élément rotatif d'entrée 8b se présentant ici sous la forme d'un disque).

En position embrayée, l'embrayage 9 rend la roue dentée 6d solidaire en rotation de l'élément rotatif d'entrée 8b, de sorte que ceux-ci tournent à la même vitesse. En position débrayée, le couplage entre la roue dentée 6d et l'élément rotatif d'entrée 8b ou disque est interrompu.

L'embrayage 9 est du type « embrayage à inertie », c'est-à-dire qu'il comprend des moyens d'actionnement à inertie 10, aptes à provoquer sélectivement l'embrayage et le débrayage en fonction de leur vitesse de rotation. Les moyens d'actionnement 10 sont couplés à l'arbre d'entrée 4, de façon à être entraînés en rotation à une vitesse supérieure à la vitesse de rotation en sortie du premier ensemble de transmission 3 (c'est-à-dire supérieure à la vitesse de rotation de la roue de sortie 6d). En pratique, les moyens d'actionnement 10 comprennent un premier plateau 13 qui est couplé à l'arbre d'entrée 4 via deux roues dentées 11 a et 11 b. La roue dentée 11 a est portée par l'arbre d'entrée 4 et est solidaire en rotation avec ce dernier, tandis que la roue dentée 11 b est solidaire en rotation du premier plateau 13 des moyens d'actionnement 10. A noter que les roues dentées 11a et 11b, dans l'exemple illustré sur les figures, présentent le même nombre de dents, de sorte qu'il ne se produit aucune réduction ni augmentation de la vitesse de rotation du moteur 5 pour l'entraînement des moyens d'actionnement 10. Les moyens d'actionnement 10 sont ainsi entraînés en rotation à la même vitesse que la vitesse de rotation de l'arbre d'entrée 4, qui est donc plus élevée que la vitesse de rotation de la roue de sortie 6d (qui est réduite par la pignonnerie 6 réductrice).

Le dispositif de transmission 1 tel qu'illustré sur les figures 1 à 3 se distingue donc de l'état de la technique par une disposition « en parallèle » du premier ensemble de transmission 3 et des moyens d'actionnement 10 à inertie de l'embrayage 9. Dans l'état de la technique mentionné précédemment, le premier ensemble de transmission et les moyens d'actionnement à inertie de l'embrayage 9 sont toujours disposés « en série ».

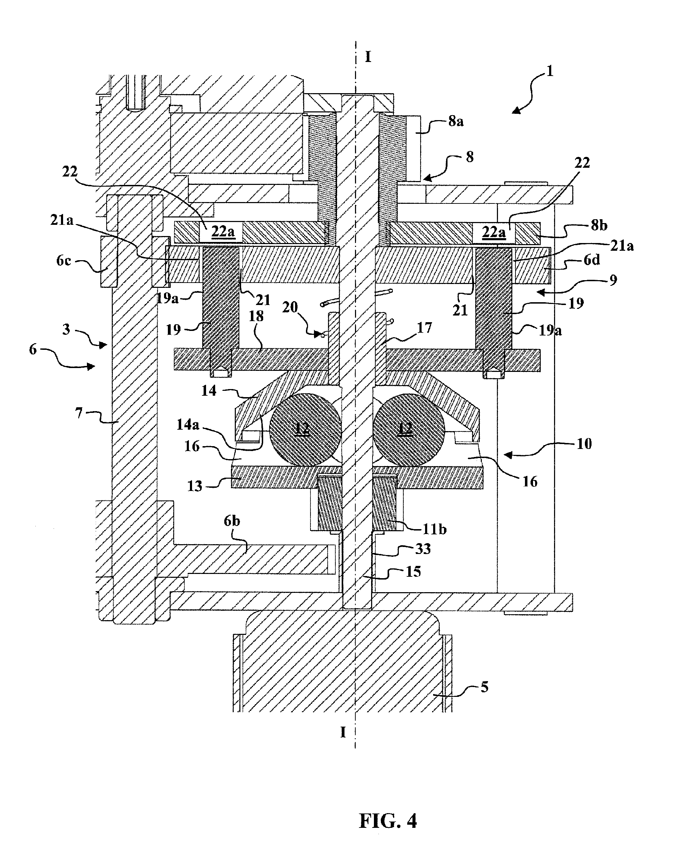

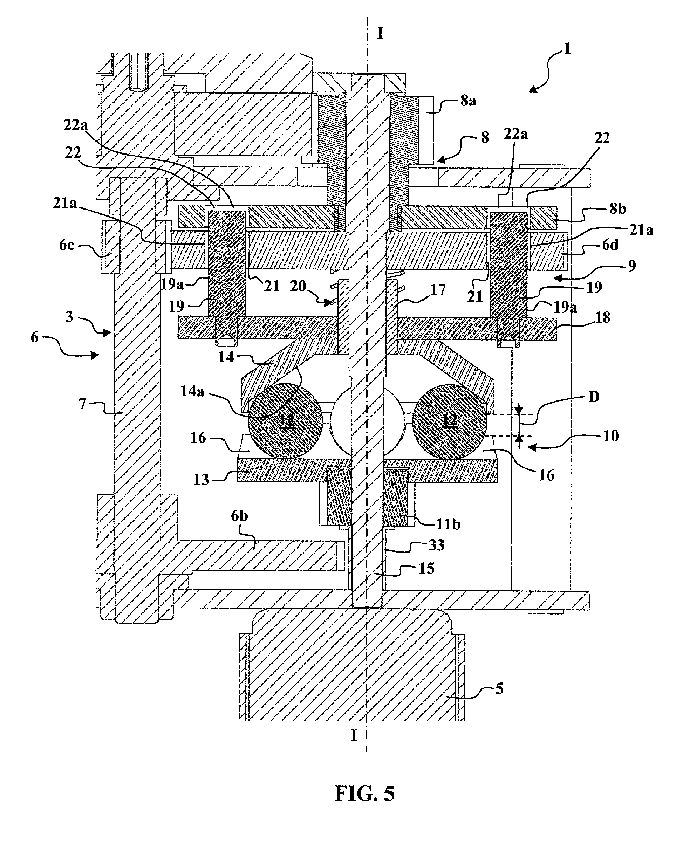

Les moyens d'actionnement 10 à inertie comportent des éléments inertiels 12 (figures 4 à 7) retenus captifs entre le premier plateau 13, couplé en rotation avec l'arbre d'entrée 4, et un deuxième plateau 14 déplaçable entre une première position axiale (figure 4) et une deuxième position axiale (figure 5). Les éléments inertiels 12 sont solidaires en rotation du premier plateau 13.

Les premier et deuxième plateaux 13 et 14 sont conformés de telle sorte que, lorsque le premier plateau 13 est entraîné en rotation au-delà d'une première vitesse prédéterminée, les éléments inertiels 12 entraînés en rotation par le premier plateau 13 se déplacent radialement sous l'action de la force centrifuge, en provoquant un déplacement axial relatif du deuxième plateau 14 vers sa deuxième position axiale à l'écart du premier plateau 13. Ceci est plus particulièrement visible sur les figures 4 et 5 où le deuxième plateau 14 s'est déplacé sur un axe 15 selon la direction I-I d'une distance D.

Détaillons maintenant, au moyen des figures 4 et 5, la composition de l'embrayage 9 et de ses moyens d'actionnement 10. Il y a tout d'abord l'axe 15 qui est fixe en rotation. Sur cet axe 15 est montée la roue dentée 11b qui est libre en rotation sur l'axe 15 et est soutenue par une entretoise 33. La roue dentée 11 b est solidaire en rotation du premier plateau 13 qui peut également librement tourner sur l'axe fixe 15. Le premier plateau 13 porte les éléments inertiels 12 qui sont reçus dans des rainures de guidage radiales 16 prévues dans le premier plateau 13. Les éléments inertiels 12 sont des billes ou sphères qui sont en contact ponctuel avec le deuxième plateau 14 qui comporte une surface intérieure 14a concave de forme tronconique. A noter qu'une surface intérieure concave de forme tronconique peut être prévue en alternative ou en complément sur le premier plateau 13.

Le deuxième plateau 14 est solidaire en rotation d'un coussinet 17 qui est libre en rotation et en translation sur l'axe 15. Le coussinet 17 est également solidaire en rotation d'un disque 18 portant des éléments d'embrayage 19.

La roue dentée ou roue de sortie 6d du premier ensemble de transmission 3 est également montée libre en rotation sur l'axe 15 fixe. Des moyens de rappel élastique 20 rappellent en permanence le deuxième plateau 14 vers sa première position axiale (figure 4) en repoussant le deuxième plateau 14 à l'écart de la roue dentée 6d.

Le deuxième plateau 14 est solidaire en rotation de la roue de sortie 6d du premier ensemble de transmission 3, par l'engagement permanent des éléments d'embrayage 19 dans des lumières 21 prévues dans la roue de sortie 6d. De cette façon, le disque 18 et le deuxième plateau 14 sont entraînés en rotation à la même vitesse que la roue dentée 6d, vitesse qui est plus faible que la vitesse de rotation du premier plateau 13 des moyens d'actionnement 10 à inertie. Il se produit donc un glissement entre les éléments inertiels 12 (couplés en rotation avec le premier plateau 13) et le deuxième plateau 14. L'appui entre les éléments inertiels 12 et le deuxième plateau 14 étant assuré par des contacts ponctuels, on limite les frottements induits par ce glissement.

Un élément rotatif d'entrée 8b (qui est ici un disque muni de trous 22) du deuxième ensemble de transmission 8 est disposé en vis-à-vis de la roue de sortie 6d du premier ensemble de transmission 3. L'élément rotatif d'entrée 8b et la roue de sortie 6d sont rotatifs autour de la même direction I-I définie par l'axe 15 fixe. L'élément rotatif d'entrée 8b est solidaire en rotation de l'élément de sortie 8a qui est ici une roue dentée portée par l'axe 15 fixe, et qui est libre en rotation sur ce dernier.

Comme illustré sur la figure 5, lorsque le deuxième plateau 14 se déplace vers sa deuxième position axiale selon une distance D, les éléments d'embrayage 19 sont déplacés en translation vers l'élément rotatif d'entrée 8b du deuxième ensemble de transmission 8, de façon à venir au contact, selon une surface latérale extérieure de contact 19a, de premières faces de butée 22a portées par l'élément rotatif d'entrée 8b du deuxième ensemble de transmission 8, pour coupler en rotation les premier et deuxième ensembles de transmission 3 et 8.

En pratique, la surface latérale extérieure de contact 19a est constituée par la surface extérieure cylindrique des éléments d'embrayage 19, tandis que les premières faces de butée 22a sont constituées par les faces intérieures cylindriques des trous 22.

Lorsque les premier et deuxième ensembles de transmission 3 et 8 sont couplés en rotation, les éléments d'embrayage 19 sont pris en cisaillement, selon leur surface latérale extérieure de contact 19a, entre les premières faces de butée 22a portées par l'élément rotatif d'entrée 8b du deuxième ensemble de transmission 8 et des deuxièmes faces de butée 21a portées par la roue de sortie 6d du premier ensemble de transmission 3. En pratique, les deuxièmes faces de butée 21a sont constituées par les surfaces intérieures cylindriques des lumières 21 pratiquées dans la roue dentée 6d. Selon la pression exercée lors de ce cisaillement, le deuxième plateau 14 est maintenu en deuxième position axiale même si le premier plateau 13 vient à être entraîné en rotation à une vitesse inférieure à la première vitesse prédéterminée.

Pour maintenir l'embrayage 9 en position embrayée lorsque la vitesse d'entraînement du premier plateau 13 devient inférieure à la première vitesse prédéterminée voire tend à s'annuler, on peut prévoir des moyens de maintien qui s'opposent à un retour du deuxième plateau 14 en première position axiale.

Dans une première variante, les moyens de maintien comportent une rugosité adaptée entre la surface latérale extérieure de contact 19a et les premières faces de butée 22a, et/ou entre la surface latérale extérieure de contact 19a et les deuxièmes faces de butée 21 a portées par la roue de sortie 6d du premier ensemble de transmission 3.

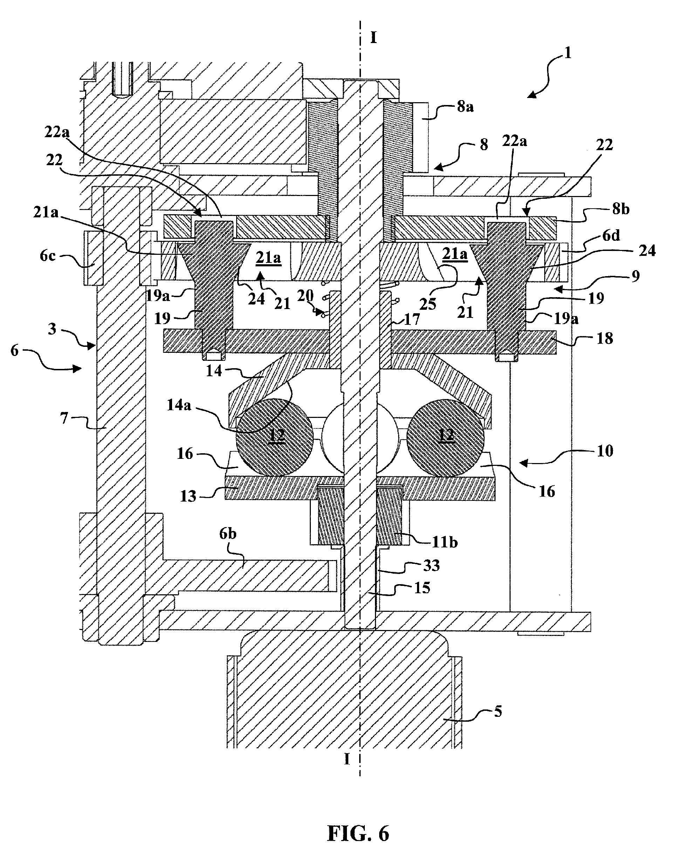

En alternative ou en complément, les moyens de maintien comportent, comme illustré sur la figure 6, une pente 24 sur la surface latérale extérieure de contact 19a et/ou une pente 25 sur les deuxièmes faces de butée 21 a. Lorsque les pentes 24 et 25 sont au contact l'une de l'autre, elles s'opposent à un écartement relatif de la roue de sortie 6d et du deuxième plateau 14 sous l'effet de la force de rappel exercée par les moyens de rappel élastique 20 (qui sont ici un ressort hélicoïdal). En alternative ou en complément, il est également possible de prévoir un contact par pentes entre les éléments d'embrayage 19 et l'élément rotatif d'entrée 8b du deuxième ensemble de transmission 8.

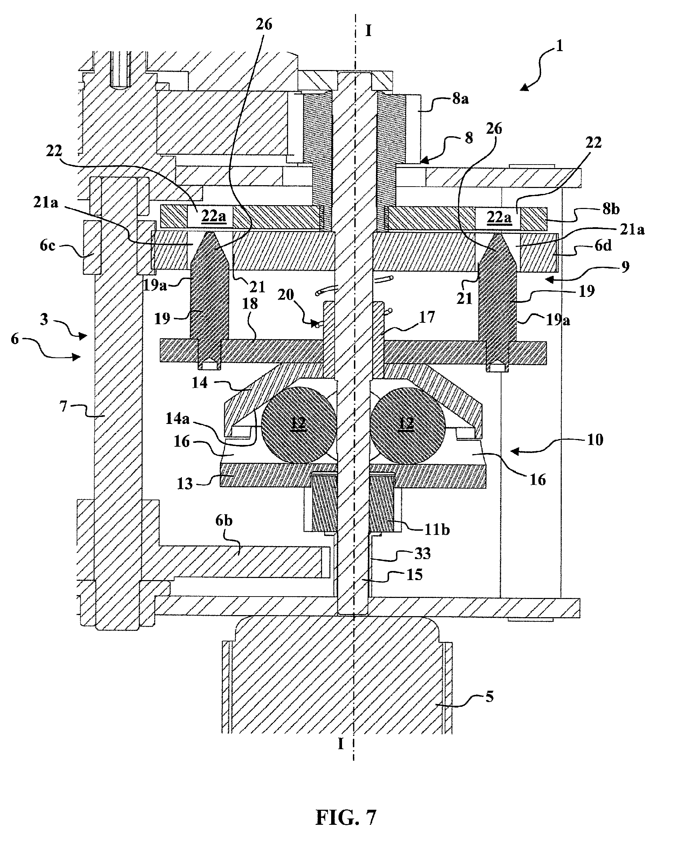

Si on veut en revanche favoriser un échappement des éléments d'embrayage 19 hors des trous 22 lorsque la vitesse de rotation du premier plateau 13 devient inférieure à la première vitesse prédéterminée, on peut prévoir des éléments d'embrayage 19 à extrémités coniques 26 comme illustré sur la figure 7.

On comprendra que la forme des éléments d'embrayage 19, la nature et la qualité des surfaces des éléments d'embrayage 19, de la roue dentée 6d, de l'élément rotatif d'entrée 8b, la masse des éléments inertiels 12 et la force des moyens de rappel élastique 20 sont autant de paramètres qui permettent d'ajuster les vitesses d'embrayage et de débrayage.

Le fonctionnement du dispositif de transmission 1 selon l'invention va être expliqué plus en détails ci-après, au moyen des figures 1 à 5.

Initialement, lorsque le moteur 5 n'est pas alimenté en courant, l'embrayage 9 se trouve dans la configuration illustrée sur la figure 4. Les éléments d'embrayage 19 ne sont pas engagés dans les trous 22 de l'élément rotatif d'entrée 8b.

Lorsque le moteur 5 est alimenté en courant, celui-ci entraîne en rotation l'arbre d'entrée 4.

En premier lieu, l'arbre d'entrée 4 entraîne en rotation le pignon 6a, qui entraîne à son tour la roue dentée 6b dont la rotation provoque la rotation du pignon 6c qui s'engrène avec la roue de sortie 6d du premier ensemble de transmission 3. Les pignons 6a et 6c et les roues dentées 6b et 6d constituent une pignonnerie 6 réductrice en vitesse de rotation, qui a pour effet d'entraîner en rotation la roue de sortie 6d à une vitesse de rotation inférieure à celle de l'arbre d'entrée 4 (et donc inférieure à celle du moteur 5).

De façon simultanée et en parallèle, l'arbre d'entrée 4 entraîne en rotation la roue dentée 11 a qui s'engrène avec la roue dentée 11 b, entraînant elle-même en rotation le premier plateau 13 autour de l'axe 15 fixe. Les roues dentées 11a et 11b ayant le même nombre de dents, le premier plateau 13 tourne à la même vitesse de rotation que l'arbre d'entrée 4 (et donc à une vitesse égale à celle du moteur 5). Il pourrait toutefois se produire une légère réduction ou augmentation de la vitesse de rotation, à condition que le premier plateau 13 reste entraîné en rotation à une vitesse supérieure à la vitesse de rotation de la roue de sortie 6d du premier ensemble de transmission 3 pour garantir une fiabilité de fonctionnement de l'embrayage 9.

Sous l'effet de la rotation du premier plateau 13, les éléments inertiels 12 (ou billes) sont également entraînés en rotation en étant reçus dans les rainures de guidage radiales 16. Au-delà de la première vitesse prédéterminée, sous l'effet de la force centrifuge, les éléments inertiels 12 se déplacent dans les rainures de guidage radiales 16 à l'écart de l'axe 15 fixe. Ce déplacement radial centrifuge des éléments inertiels 12 provoque, grâce à la surface intérieure 14a concave de forme tronconique du deuxième plateau 14, un déplacement axial relatif du deuxième plateau 14 vers sa deuxième position axiale illustrée sur la figure 5.

Le déplacement du deuxième plateau 14 vers sa deuxième position axiale provoque une compression des moyens de rappel élastique 20 et un engagement des éléments d'embrayage 19 dans les trous 22 de l'élément rotatif d'entrée 8b se présentant ici sous la forme d'un disque. L'élément rotatif d'entrée 8b du deuxième ensemble de transmission 8 est alors couplé en rotation avec la roue dentée de sortie 6d du premier ensemble de transmission 3, ce qui a pour effet de mettre en rotation l'élément de sortie 8a du deuxième ensemble de transmission 8.

Il doit être noté que la solidarisation en rotation entre la roue dentée de sortie 6d et l'élément rotatif d'entrée 8b se fait à une vitesse de rotation réduite grâce à la pignonnerie 6 réductrice, ce qui limite les contraintes et chocs entre l'élément d'embrayage 19 et l'élément rotatif d'entrée 8b et contribue à sa longévité.

Lorsqu'une résistance est opposée à l'élément de sortie 8a et nécessite un couple d'entraînement plus élevé, cela a pour effet de faire chuter la vitesse d'entraînement délivrée par le moteur 5. La vitesse d'entraînement du premier plateau 13 diminue donc, mais le maintien du deuxième plateau 14 en deuxième position axiale est assuré par la pression de cisaillement appliquée sur les éléments d'embrayage 19 par la roue dentée 6d et l'élément rotatif d'entrée 8b, ainsi que par les moyens de maintien. En fonction des matériaux utilisés pour la roue dentée 6d, l'élément rotatif d'entrée 8b, les éléments d'embrayage 19, et en fonction de la configuration des moyens de maintien, de la force de rappel exercée par les moyens de rappel élastique 20, et de la masse des éléments inertiels 12, il est possible de maintenir l'embrayage 9 en position embrayée jusqu'à ce que la vitesse du moteur devienne inférieure à la première vitesse prédéterminée, voire tende à s'annuler.

Une fois que la vitesse du moteur est nulle et qu'il n'est plus alimenté en courant, le moteur n'applique plus qu'un léger couple de résistance sur l'arbre d'entrée 4. Les moyens de rappel élastique 20 exercent alors une force suffisante pour ramener le deuxième plateau 14 dans sa première position axiale (figure 4) de sorte que les éléments d'embrayage 19 sont totalement retirés hors des trous 22. Le premier ensemble de transmission 3 et le deuxième ensemble de transmission 8 sont alors parfaitement découplés. Si l'élément de sortie 8a du deuxième ensemble de transmission 8 est manoeuvré de façon inverse, cela entrainera en rotation l'élément rotatif d'entrée 8b uniquement. Ni la pignonnerie 6 réductrice du premier ensemble de transmission 3 ni le moteur 5 ne seront mis en rotation, l'embrayage 9 étant en position débrayée. On évite ainsi toute résistance opposée par le premier ensemble de transmission 3 et le moteur 5 lors d'une manoeuvre inverse.

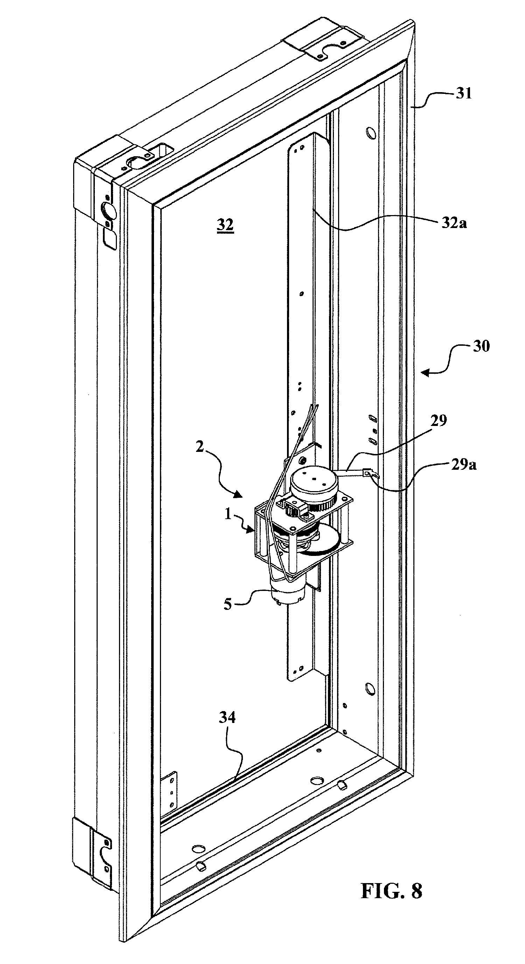

Sur la figure 1, on distingue des moyens d'actionnement 27 d'un ouvrant 32 (figure 8) qui comprennent une poulie 28 couplée à l'élément de sortie 8a et sur laquelle s'enroule et se déroule un ruban 29 métallique flexible. Ces moyens d'actionnement 27 sont utilisés dans un dispositif d'obturation 30 illustré sur la figure 8.

Sur la figure 8 est en effet représenté un dispositif d'obturation 30 pour l'obturation d'une lumière d'un conduit aéraulique, notamment pour l'aération et l'évacuation de fumées d'un bâtiment. Ce dispositif d'obturation 30 comporte :
- un dormant 31 destiné à être monté dans la lumière du conduit aéraulique,
- un ouvrant 32 monté sur le dormant 31 par des moyens de liaison (de type charnières par exemple), et déplaçable entre une position d'ouverture et une position de fermeture.

A l'extrémité libre 32a de l'ouvrant 32 est installé un dispositif de transmission 1 selon l'invention, mû par un moteur 5 qui est de préférence de type moteur électrique à courant continu. Des moyens de rappel rappellent en permanence l'ouvrant 32 en position d'ouverture. L'extrémité libre 29a du ruban 29 est solidaire du dormant 31. Des moyens de verrouillage (non représentés) commandés à distance retiennent l'ouvrant 32 en position fermée.

Lorsqu'un incendie se déclare ou lorsqu'un contrôle d'ouverture de l'ouvrant 32 est effectué, l'ouvrant 32 est déverrouillé et est rappelé en ouverture par les moyens de rappel. Le moteur 5 n'étant pas alimenté, l'embrayage 9 se trouve en position débrayée avec le deuxième plateau 14 disposé en première position axiale (figure 4).

Lorsque l'ouvrant 32 s'ouvre, le ruban 29 se déroule depuis la poulie 28 qui entraîne en rotation l'élément de sortie 8a ainsi que l'élément rotatif d'entrée 8b du deuxième ensemble de transmission 8. La seule résistance opposée à l'ouverture de l'ouvrant 32 est celle induite par le deuxième ensemble de transmission 8, car le premier ensemble de transmission 3 et le moteur 5 sont efficacement maintenus découplés par l'embrayage 9.

Lorsque l'on souhaite refermer l'ouvrant 32, on alimente le moteur 5 en courant électrique. Lorsque le premier plateau 13 est entraîné en rotation au-delà de la première vitesse prédéterminée, l'embrayage 9 couple en série (deuxième position axiale, figure 5) la sortie du premier ensemble de transmission 3 (roue dentée de sortie 6d) et l'entrée du deuxième ensemble de transmission 8 (qui est ici l'élément rotatif d'entrée 8b ou disque) de façon à provoquer l'enroulement du ruban 29 sur la poulie 28.

Peu avant la fermeture complète de l'ouvrant 32, il se produit une compression de joints d'étanchéité 34 prévus entre le dormant 31 et l'ouvrant 32. Cette compression induit une résistance qui demande un entraînement à un couple augmenté, ce qui a pour effet de faire chuter la vitesse de rotation du moteur 5. Toutefois, l'embrayage 9 reste en position embrayée malgré le fait que les moyens d'actionnement à inertie 10 (notamment le premier plateau 13) sont entraînés à une vitesse de rotation inférieure à la première vitesse prédéterminée. Le mouvement de fermeture de l'ouvrant 32 se poursuit donc en comprimant les joints d'étanchéité 34 et en permettant le verrouillage de l'ouvrant 32. La fin de compression des joints d'étanchéité 34 est détectée par un pic d'intensité dans le courant d'alimentation du moteur 5, pic qui est détecté par une carte électronique qui pilote alors l'arrêt de l'alimentation du moteur 5. L'embrayage 9 est alors mis en position débrayée sous l'effet des moyens de rappel élastique 20. Lors d'une manoeuvre ultérieure en ouverture de l'ouvrant 32 sous l'effet des moyens de rappel, ni le premier ensemble de transmission 3 ni le moteur 5 ne s'opposent à cette ouverture.

Dans l'exemple illustré sur les figures, le deuxième ensemble de transmission 8 est suivi d'une pignonnerie réductrice en vitesse de rotation. Celle-ci est facultative et a été dimensionnée de façon à ne pas perturber trop la manoeuvre inverse de l'ouvrant 32.

La présente invention n'est pas limitée aux modes de réalisation qui ont été explicitement décrits, mais elle en inclut les diverses variantes et généralisations contenues dans le domaine des revendications ci-après.

## Revendications

1. - Dispositif de transmission (1) automatiquement embrayable et débrayable, comprenant :
- un premier ensemble de transmission (3) à arbre d'entrée (4) destiné à être entraîné par un moteur (5), et comportant une pignonnerie (6) réductrice en vitesse de rotation,
- un deuxième ensemble de transmission (8) à élément de sortie (8a),
- un embrayage (9) permettant de sélectivement coupler en série ou découpler la sortie du premier ensemble de transmission (3) et l'entrée du deuxième ensemble de transmission (8),
- des moyens d'actionnement (10) à inertie de l'embrayage (9), aptes à provoquer sélectivement l'embrayage et le débrayage en fonction de leur vitesse de rotation, **caractérisé en ce que** les moyens d'actionnement (10) sont couplés à l'arbre d'entrée (4) de façon à être entraînés en rotation à une vitesse supérieure à la vitesse de rotation en sortie du premier ensemble de transmission (3).

2. - Dispositif de transmission (1) selon la revendication 1, **caractérisé en ce que** :
- les moyens d'actionnement (10) comportent des éléments inertiels (12) retenus captifs entre un premier plateau (13), couplé en rotation avec l'arbre d'entrée (4), et un deuxième plateau (14) déplaçable entre une première position axiale et une deuxième position axiale, les éléments inertiels (12) étant solidaires en rotation du premier plateau (13),
- les premier (13) et deuxième (14) plateaux sont conformés de telle sorte que, lorsque le premier plateau (13) est entraîné en rotation au-delà d'une première vitesse prédéterminée, les éléments inertiels (12) entraînés en rotation par le premier plateau (13) se déplacent radialement de façon centrifuge en provoquant un déplacement axial relatif du deuxième plateau (14) vers sa deuxième position axiale à l'écart du premier plateau (13).

3. - Dispositif de transmission (1) selon la revendication 2, **caractérisé en ce que** le premier plateau (13) et/ou le deuxième plateau (14) ont une surface intérieure (14a) concave de forme tronconique.

4. - Dispositif de transmission (1) selon l'une des revendications 2 ou 3, **caractérisé en ce que** l'embrayage (9) comporte des moyens de rappel élastique (20) du deuxième plateau (14) vers sa première position axiale.

5. - Dispositif de transmission (1) selon l'une quelconque des revendications 2 à 4, **caractérisé en ce que** les éléments inertiels (12) sont reçus dans des rainures de guidage radiales (16) prévues dans le premier plateau (13).

6. - Dispositif de transmission (1) selon l'une quelconque des revendications 2 à 5, **caractérisé en ce que** :
- le deuxième plateau (14) est solidaire en rotation d'une roue de sortie (6d) du premier ensemble de transmission (3) et comporte au moins un élément d'embrayage (19),
- les éléments inertiels (12) sont en contact ponctuel avec le deuxième plateau (14), et sont de préférence des billes.

7. - Dispositif de transmission (1) selon l'une quelconque des revendications 2 à 6, **caractérisé en ce que** :
- le deuxième plateau (14) est solidaire en rotation d'une roue de sortie (6d) du premier ensemble de transmission (3) et comporte au moins un élément d'embrayage (19),
- un élément rotatif d'entrée (8b) du deuxième ensemble de transmission (8) et la roue de sortie (6d) du premier ensemble de transmission (3) sont disposés en vis-à-vis et sont rotatifs autour d'une même direction de rotation (I-I),
- lorsque le deuxième plateau (14) se déplace vers sa deuxième position axiale, l'élément d'embrayage (19) est déplacé en translation vers l'élément rotatif d'entrée (8b) du deuxième ensemble de transmission (8), de façon à venir au contact, selon une surface latérale extérieure de contact (19a), d'une première face de butée (22a) portée par l'élément rotatif d'entrée (8b) du deuxième ensemble de transmission (8) pour coupler en rotation les premier (3) et deuxième (8) ensembles de transmission.

8. - Dispositif de transmission (1) selon la revendication 7, **caractérisé en ce que** l'élément d'embrayage (19) est en permanence engagé dans une lumière (21) prévue dans la roue de sortie (6d) du premier ensemble de transmission (3).

9. - Dispositif de transmission (1) selon l'une des revendications 7 ou 8, **caractérisé en ce que**, pour coupler en rotation les premier (3) et deuxième (8) ensembles de transmission, l'élément d'embrayage (19) est pris en cisaillement, selon sa surface latérale extérieure de contact (19a), entre la première face de butée (22a) portée par l'élément rotatif d'entrée (8b) du deuxième ensemble de transmission (8) et une deuxième face de butée (21 a) portée par la roue de sortie (6d) du premier ensemble de transmission (3).

10. - Dispositif de transmission (1) selon l'une quelconque des revendications 7 à 9, **caractérisé en ce qu'**il comporte des moyens de maintien qui s'opposent à un retour du deuxième plateau (14) en première position axiale.

11. - Dispositif de transmission (1) selon la revendication 10, **caractérisé en ce que** les moyens de maintien comportent une rugosité adaptée entre la surface latérale extérieure de contact (19a) et la première face de butée (22a), et/ou entre la surface latérale extérieure de contact (19a) et une deuxième face de butée (21 a) portée par la roue de sortie (6d) du premier ensemble de transmission (3).

12. - Dispositif de transmission (1) selon l'une des revendications 10 ou 11, **caractérisé en ce que** les moyens de maintien comportent une pente (24) sur la surface latérale extérieure de contact (19a) et/ou une pente sur la première face de butée (22a) et/ou une pente (25) sur la deuxième face de butée (21 a).

13. - Dispositif de motorisation débrayable (2) pour la manoeuvre d'un ouvrant (32) comprenant un dispositif de transmission (1) selon l'une quelconque des revendications 1 à 12, **caractérisé en ce qu'**il comporte un moteur électrique (5) à courant continu entraînant l'arbre d'entrée (4).

14. - Dispositif de motorisation débrayable (2) selon la revendication 13, **caractérisé en ce qu'**il comporte des moyens d'actionnement (27) de l'ouvrant (32) qui comprennent une poulie (28), couplée à l'élément de sortie (8a) du deuxième ensemble de transmission (8), sur laquelle s'enroule et se déroule un ruban (29) métallique flexible.

15. - Dispositif d'obturation (30) d'une lumière d'un conduit aéraulique, notamment pour l'aération et l'évacuation de fumées d'un bâtiment, comportant :
- un dormant (31) destiné à être monté dans la lumière du conduit aéraulique,
- au moins un ouvrant (32) monté sur le dormant (31) par des moyens de liaison, et déplaçable entre une position d'ouverture et une position de fermeture,
**caractérisé en ce qu'**il comporte un dispositif de transmission (1) selon l'une quelconque des revendications 1 à 12, mû par un moteur électrique (5).

16. - Dispositif d'obturation (30) selon la revendication 15, **caractérisé en ce qu'**il comporte des moyens de rappel de l'ouvrant (32) en position d'ouverture.
